# EUROPEAN PATENT SPECIFICATION

(11) **EP 3 907 399 B1**
(45) Date of publication and mention of the grant of the patent: **23.08.2023**
(21) Application number: 21460023.1
(22) Date of filing: 20.04.2021
(51) Int. Cl.: F03B 13/00, F03G 7/05

(54) **WATER POWER PLANT**
WASSERENERGIEANLAGE
CENTRALE HYDRAULIQUE

(30) Priority: 28.04.2020 PL 43372520
(43) Date of publication of application: 10.11.2021
(73) Proprietor: Politechnika Slaska, 44-100 Gliwice (PL)
(72) Inventor: Wilk, Andrzej, 44-100 Gliwice (PL)

(56) References cited:
- WO-A1-00/53924
- GB-A- 2 361 749
- JP-A- S5 770 959
- SU-A1- 1 456 633

## Description

The subject of the invention is a water power plant applicable to the conversion of sea water energy into mechanical energy driving an electric generator. The invention can be applied in power industry for the production of electricity from renewable sources. The power plant uses the flow of water resulting from existing in a sea or an ocean water a temperature gradient and a concentration gradient of dissolved substances. The water power plant according to the invention uses the differences in water temperature and salinity at different depths in a sea or an ocean to cause flow of the water and convert it into mechanical energy.

So far have been known water power plants, which use water flowing from a higher to a lower level to drive the electric generator using a water turbine.

In addition, there are known water power plants that use water turbines, in which is used the energy of sea water resulting from the existence of sea currents. In such power plants, the basic direction of water flow is horizontal, while the flow of water results from the existence of natural, constant or periodic sea currents, therefore the horizontal component of the speed of the flowing water is used.

There are also known water power plants that use water or air turbines, in which the change of the potential energy of the position of the water resulting from sea or ocean high and low tide is used.

There are also known water power plants with water turbines, air turbines or mechanical systems using the sea or ocean waves.

From the description of WO0053924A1 is known a hydraulic power generation system is provided for generating power using a pseudo-osmosis process which efficiently exploits the osmotic energy potential between two bodies of water having different salinity concentrations. The method and apparatus of the present invention does not require the use of a semi-permeable membrane or other specially formulated material, nor does it require heating or cooling of the fresh water or salt water solution. Moreover, the device may be used to recover energy from a wide variety of fresh water sources, including treated or untreated river run-off, treated wastewater run-off or effluent, storm-drain run-off, partly contaminated fresh water run-off, and a wide variety of other fresh water sources. The device is well suited to power production in a wide variety of geographic locations and under a wide variety of conditions. The invention has particular advantage for use in remote regions where electrical power generation by conventional means may be commercially infeasible or impractical.

From the description of Polish utility model Ru062226, a cylindrical water power plant is known for use by individual customers, built on various watercourses, having the shape of a cylinder, rotatably mounted on the main shaft, that is set on the watercourse. On the outer surface of the cylinder, blades parallel to the axis of rotation are arranged, with a convexity directed to the direction of rotation of the main cylinder, while inside, there is a set of cogged rings, which is permanently connected to the inner surface of the cylinder, and the inner part is rotatably mounted on the main shaft, with an electric generator mounted on the main shaft, having a cogwheel cooperating with any cogged ring of the cogged ring set and the electric generator rotational speed setter.

From description of Polish patent PL228459, a water power plant is known for facilities with low energy demand, using the horizontal component of water waves with the possibility of its transfer after use.

From description of the application for another Polish utility model W.127500, there is a known run-of-river water power plant for generating electricity by converting the energy of the water flow, equipped with a water turbine which is set in motion by the flow of water using the natural hydraulic drop of a stream or river. The water power plant consists of a pipeline laid in the river bed along its current or at the upper water level, and a grating sedimentation tank connected to an absorption well equipped with a water level indicator, in which the upper end of the pipeline is connected, equipped with a ball valve and Kaplan turbine units, mechanically connected with electric generators mounted on tubular elements provided with valves branching the lower end of the pipeline.

The scope of the invention is to create a flow of seawater inside a vertical pipe placed in the sea or an ocean, and then convert the energy of the flowing water into electricity using a water turbine to convert the energy of the flowing water into mechanical energy driving an electric generator.

This aim was achieved by placing the pipe in the sea or in the ocean so, that one end of the pipe is in water of a different salinity or temperature than the other end of the pipe. Due to the occurrence of a natural temperature and salinity gradient in the seas and oceans, after initiating the flow of the water in the pipe, in the power plant pipe will exist a natural flow of water, which means that water will have energy greater than zero. The energy of the flowing water is converted in a water turbine into mechanical energy, which an electric generator converts into electricity.

The water power plant according to the invention is characterized in that, the inflow cross-section of a vertical pipe is placed in water with a temperature or salinity different from the outflow cross-section.

The water power plant according to the invention is a pipeline in the form of a vertical pipe (1) immersed in the sea or in the ocean. The vertical pipe (1) on the inflow (2) has the shape of a lemniscate (4). Inside the vertical pipe (1) there are at least one set of straightening vanes (5) and at least three guiding vanes (6), fixed or adjustable, behind which there is a turbine impeller (7), and then a vane diffuser (7) that changes the direction of water flow from axial-radial to radial. On its periphery, along the vertical pipe (1), on its outer side, there are at least three buoyancy chambers (9) and at least three ballast chambers (10), preferably located in the lower part of the pipe.

After initiating the flow of the water in the vertical pipe (1), seawater is sucked into it and fills it up. The water in the vertical pipe (2) has a constant salinity and a constant temperature because it has been sucked into the pipe from the sea layer at the depth of the inflow (2). The water outside the vertical pipe (1) has a temperature and salinity resulting from the natural distribution of these parameters in the sea or ocean. The hydrostatic pressure of the seawater at the depth of inflow (2) to the vertical pipe (1) on the outside of the pipe is different from the hydrostatic pressure of the seawater inside the pipe. As a result of the hydrostatic pressure difference, the self-acting flow of the water will occur inside the pipe (1). The turbine impeller (7) located inside the vertical pipe (1) enables the conversion of the kinetic energy of water into mechanical energy. The outflow of water from the vertical pipe (1) takes place under the water surface, in a direction perpendicular to the axis of the pipe (1), with the outlet cross-section (3) being larger in diameter than the internal diameter of the vertical pipe (1). The vertical pipe (1) is equipped with at least three buoyancy chambers (9) located along the outer side of the pipe (1). The vertical pipe (1) is equipped with at least three ballast chambers (10), preferably located in the lower part of the pipe.

The subject of the invention is shown in an exemplary embodiment in a drawing showing an axial cross-section of a water power plant.

The water power plant according to the invention has a fixed vertical pipe 1, the inflow cross-section 2 of which is immersed in the water at a different depth than the outflow cross-section 3. The inflow cross-section 2 is lemniscate-shaped 4. Inside the vertical pipe 1 there are sets of straightening vanes 5. In the vertical pipe 1, there are at least three guide vanes 6, fixed or adjustable, then a water turbine impeller 7 and a vane diffusor 8 changing the direction of the water from axial-radial to radial. Along the vertical pipe 1, on its outer side, there are buoyancy chambers 9 in an amount of at least three and ballast chambers 10 in an amount of at least three, preferably located in the lower part of the pipe 1.

Seawater inflows through the lemniscate-shaped inflow cross-section of the pipe and flows inside the vertical pipe. The straightening vanes reduce the occurrence of non-axial components of water velocity. After flowing through the pipe, the water enters the guide vanes, which give the water velocity circumferential component, and then the water flows through the water turbine impeller. In the impeller, the energy of water is converted into mechanical energy. Mechanical energy is converted into electricity in the generator. Then the water flows through the vane diffuser, in which the water flow direction changes from axial-radial to radial. The water outflows below the water surface at a different depth than the water inflows to the pipe.

The advantage of the solution according to the invention is the self-acting flow of water in the pipe, caused by a change in salinity or water temperature with the depth. The lemniscate-shaped inflow into the pipe enables a gentle increase the flow velocity, and thus reduces the occurrence of local hydraulic losses at the inflow of the pipe. Straightening vanes placed inside the pipe make it possible to prevent a circumferential velocity of water inside the pipe, which makes it possible to reduce the linear losses associated with the flow of water through the pipe. The guide vanes located at the inflow to the water turbine impeller enable the change of the direction of water flow from axial to axial-circumferential and enable impact-free inflow of water to the water turbine blades. The vane diffusor behind the turbine impeller enables the change of kinetic energy of water into pressure energy and enables the change of the flow direction from axial-radial to radial. The buoyancy tanks located along the pipe make it possible to ensure the buoyancy of the entire power plant close to zero and to reduce the tensile stress in the pipe. Ballast tanks make it possible to keep the vertical position of the pipe in the sea.

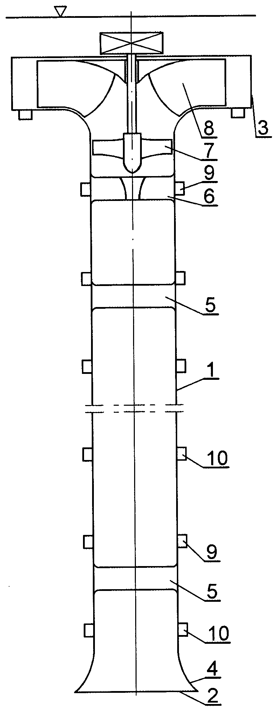

## Claims

1. Water power plant, which is a water turbine placed in a pipeline whereby the pipeline is a vertical pipe (1) immersed in a sea or an ocean which on the inflow (2) has the shape of a lemniscate (4) and has at least one set of straightening vanes and at least three guide vanes (6), fixed or adjustable, located at the inflow of a turbine impeller (7), behind which there is a vane diffusor (8) that changes the direction of water flow from the axial-radial to radial, along the vertical pipe (1) peripheral on its outer side buoyancy chambers (9) in number of at least three and ballast chambers (10) in number of at least three are located on the outer side, preferably at the lower part of the pipe (1).

2. Water power plant according to claim 1 **characterized in that** the inflow (2) cross-section of the vertical pipe (1) is placed in water with a temperature or salinity different than the outflow cross-section (3).

3. Water power plant according to claim 1 **characterized in that** the outflow cross-section (3) is at a diameter at least 10% larger than the inner diameter of the vertical pipe (1).

## Patentansprüche

1. Wasserkraftwerk, bestehend aus einer Wasserturbine, die in einer Rohrleitung angeordnet ist, **dadurch gekennzeichnet, dass** die Rohrleitung ein senkrechtes, in das Meer oder den Ozean eingetauchtes Rohr (1) ist, das im Zuflussquerschnitt (2) die Form einer Limineskate (4) hat und mindestens einen Satz von Richtschaufeln und mindestens drei feste oder verstellbare Steuerschaufeln (6) aufweist, die im Zuflussquerschnitt des Rotors (7) der Turbine angeordnet sind, hinter denen sich eine Steuerschaufelvorrichtung (8) befindet, die die Richtung des Wasserstroms von axial-radial zu radial ändert, entlang des senkrechten Rohrs (1) in Umfangsrichtung an seiner Außenseite mindestens drei Verdrängungskammern (9) und mindestens drei Ballastkammern (10), optimal im unteren Teil des Rohrs (1), vorhanden sind.

2. Wasserkraftwerk nach Anspruch 1, **dadurch gekennzeichnet, dass** der Zuflussquerschnitt (2) des senkrechten Rohrs (1) in Wasser mit einer anderen Temperatur oder einem anderen Salzgehalt als der Abflussquerschnitt (3) angeordnet ist.

3. Wasserkraftwerk nach Anspruch 1, **dadurch gekennzeichnet, dass** der Abflussquerschnitt (3) einen Durchmesser aufweist, der mindestens 10 % größer ist als der Innendurchmesser des senkrechten Rohrs (1).

## Revendications

1. Centrale hydraulique, constituée par une turbine hydraulique placée dans un conduit, **caractérisée en ce que** le conduit est un tube vertical (1) immergé dans la mer ou l'océan, qui, sur l'afflux (2), a la forme d'une lemniscate (4) et a au moins un assemblage d'aubes de redressement et au moins trois aubes directrices (6), fixes ou réglables, placées sur l'afflux d'une roue (7) de turbine, derrière laquelle se trouve un aubage directeur (8), qui modifie la direction du flux d'eau d'axiale-radiale à radiale, le long du tube vertical (1) circonférentiellement sur son côté extérieur se trouvent des chambres (9) de flottaison au nombre de trois au moins et des chambres (10) de ballast au nombre de trois au moins, avantageusement dans la partie inférieure du tube (1).

2. Centrale hydraulique selon la revendication 1, **caractérisée en ce que** la section d'afflux (2) du tube (1) vertical est placée dans une eau dont la température ou la salinité est différente de celle de la section d'écoulement (3).

3. Centrale électrique selon la revendication 1, **caractérisée en ce que** la section d'écoulement (3) se trouve sur un diamètre au moins 10% plus grand que le diamètre intérieur du tube vertical (1).
